# EUROPEAN PATENT SPECIFICATION

(11) **EP 1 712 412 B1**
(45) Date of publication and mention of the grant of the patent: **09.12.2009**
(21) Application number: 06112415.2
(22) Date of filing: 10.04.2006
(51) Int. Cl.: B60P 1/48

(54) **Remote controlled powered pivoting skip loader/attachment**
Ferngesteuerte und drehbare Vorrichtung zum Laden von einem Absetzkipper
Dispositif pivotant et télécommandé de chargement d'une benne amovible

(30) Priority: 12.04.2005 GB 0507292
(43) Date of publication of application: 18.10.2006
(73) Proprietor: Forbes-Buthlay, Andrew, 2018 Antwerp (BE)
(72) Inventor: Forbes-Buthlay, Andrew, 2018 Antwerp (BE)

(56) References cited:
- DE-A1- 2 611 150
- DE-U1- 20 007 538
- DE-U1- 29 506 371
- FR-A- 2 443 347

## Description

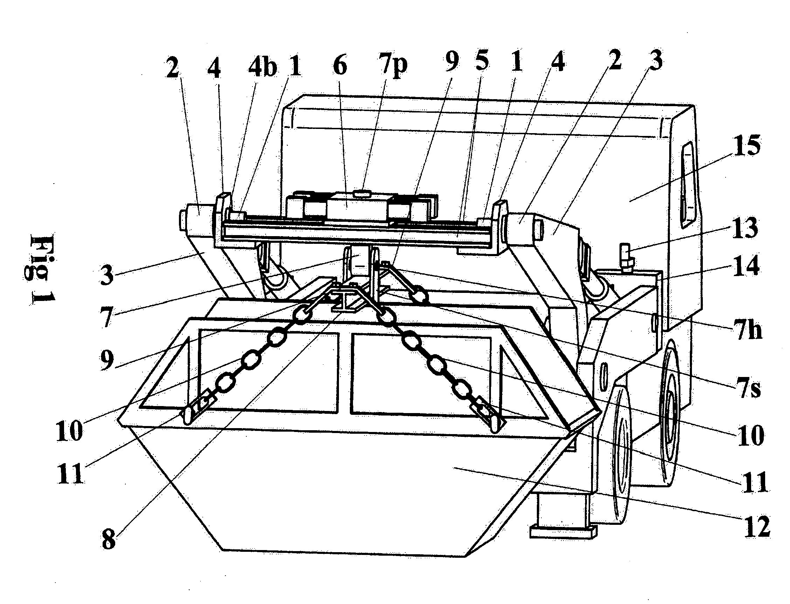

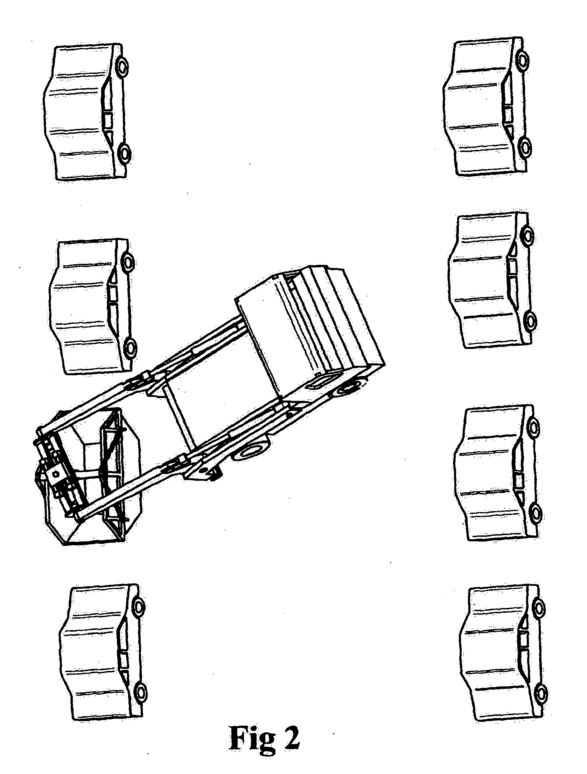

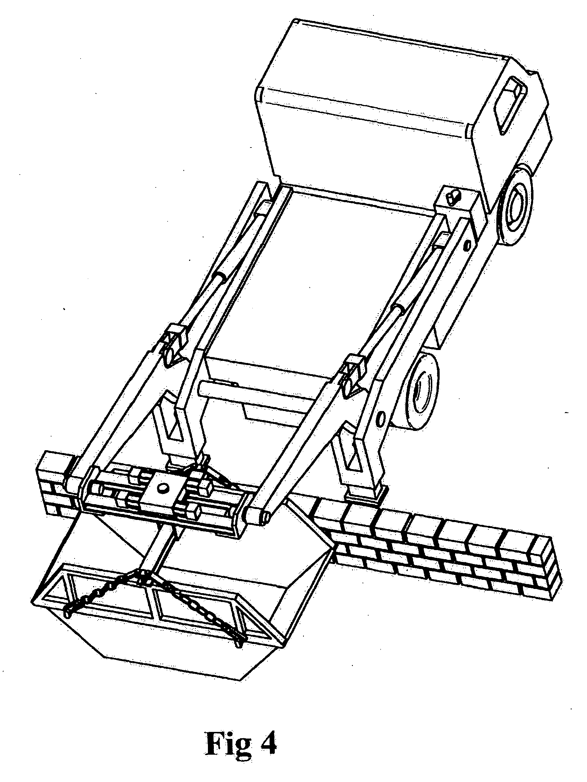

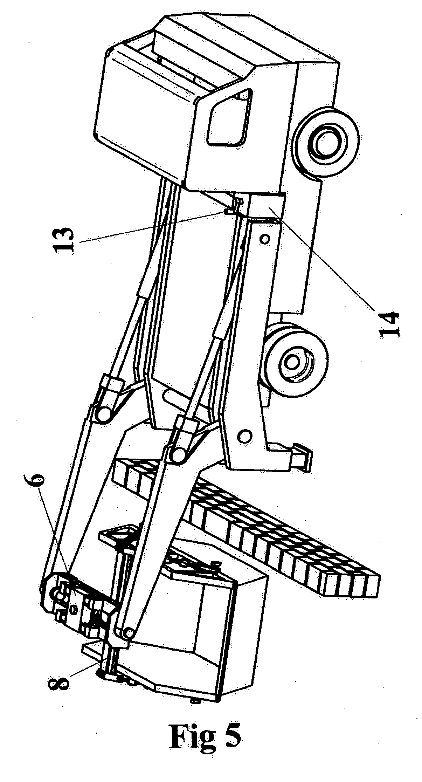

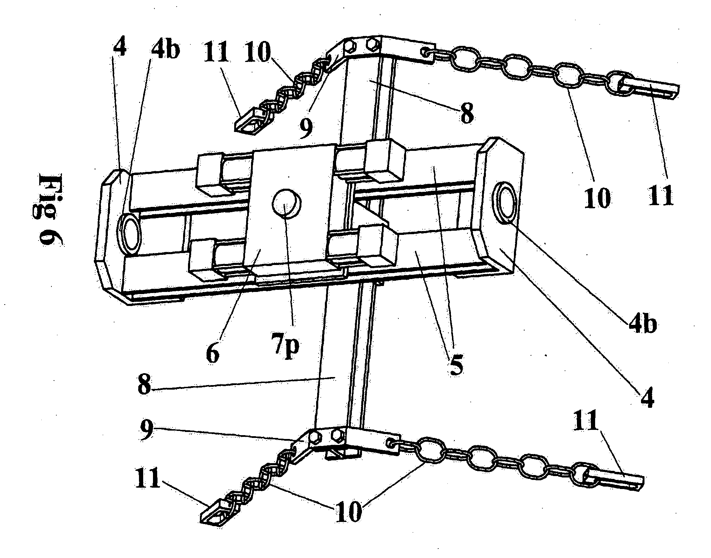

**Field:** This invention relates to a Remote Controlled Powered Pivoting Skip Loader available as a complete product, Figs 1- 5, or alternatively as a conversion attachment Fig 6, for existing skip loaders, both for easy pivoting, placing and retrieving of skips on and off ground at any desirable angle to the heading of the Skip Loader Vehicle, making it convenient to place and retrieve skips in a restricted space (Fig 2) such as between two parked vehicles or (Figs 4 & 5) over a boundary wall - not possible with present skip loaders unable to pivot skip and require length of skip loader vehicle plus length of skip when placing and retrieving a skip straight behind skip loader.

### Definitions in this Citation:

**Skip:** A large trapezoidal shaped-steel container used for carrying debris and rubble from building sites, provided with chain attachment steel lugs to facilitate placing and retrieving on and off ground, and onto a skip loader.

**Skip Loader:** A lorry provided with hydraulic ram actuated Swing Lift Arms, Shackles, Chain and Links for attachment to skip lifting lugs specifically designed for hoisting, placing and retrieving skips on and off ground, and back onto vehicle.

### EXISTING STATE OF THE ART - DRAWBACKS

Most present day skip loaders are rather restricted in that they are only able to place and retrieve a skip directly behind a skip loader vehicle with the skip heading the same as the skip loader vehicle. This presents serious difficulties when off-loading skips in a space not much bigger than the length of the skip itself, such as the space between two parked vehicles in the road, (Fig 2) which is very often the case nowadays when more than ever people own cars. This problem creates a lot of inconvenience and wasted time for the skip loader operator. He generally has only two options, one, to ring several doorbells to find out if the vehicle owners are available to move their vehicles, the other fraught with hazards - place the skip on the road near the restricted available space and by a number of drastic push and pull manoeuvres, move the skip using the outriggers and bumpers of the skip vehicle to drag the skip over the road surface into the desired location. This drastic push pull action causes serious damage to the road surface and skip vehicle, not to speak of the possible hazard of accidentally damaging the adjacent parked vehicles.

DE 200 07 538 (Perlini, Bruno) discusses a vehicle for transporting and unloading of containers, the vehicle configured to unload containers to the rear and to the side of the vehicle by having a rotating disc or platform at the rear axle to facilitate such uploading.

**INVENTIVE STEP / OBJECT:** The **inventive step** of the present invention is to overcome the above-mentioned shortcomings and drawbacks in the present state of the art by providing a Remote Controlled Powered Pivoting Skip Loader / Attachment for easy pivoting, placing and retrieving of skips on and off ground at any desirable angle to the heading of the Skip Loader Vehicle, making it convenient to place and retrieve skips in a restricted space such as (Fig 2) between two parked vehicles, or (Figs 4 & 5) over a boundary wall, without manual effort or inflicting damage to road surfaces and skip vehicle, nor risk of accidentally damaging adjacent vehicles.

### NO ANTICIPATIONS:

At the time of filing, Searches on Patent databases and Product Searches produced no anticipations for Remote Controlled Powered Pivoting Skip Loader / Attachment capable of Remote Controlled Powered pivoting, placing and retrieving of skips on and off ground at any desirable angle to the heading of the Skip Loader Vehicle. Although some skip loaders have been manufactured with the facility to pivot the skip behind the skip loader, the pivoting action is not powered nor remote controlled, with the drawback of requiring muscular strength, usually by a lone skip loader operator himself, with a potential hazard of personal rupturing injury, collateral damage - particularly if the skip is very large and heavily loaded.

**Summary of Invention:** - Remote Controlled Powered Pivoting Skip Loader / Attachment comprising shafts, attached to skip loader's lift arms, attached to self-levelling beam, supporting a Pivoting Actuator and a lateral self-levelling suspension bar linked with Skip Chains to skip, the Controls and Actuator use existing (preferably hydraulic) power source on skip loader.

**USES:** Remote Controlled Powered Pivoting Skip Loader for easy pivoting, placing and retrieving of skips on and off ground at any desirable angle to the heading of the Skip Loader Vehicle particularly in a space between parked vehicles Fig 2.

### Advantages:

1. Easy, quick and precise powered pivoting, placing and retrieving of skips on and off ground at any desirable angle to heading of Skip Loader Vehicle.
2. Convenient to place and retrieve skips in a restricted space between two parked vehicles even in restricted space with vehicles parked on both sides of road (Fig 2).
3. Saves time not having to ring several doorbells to find out if the vehicle owners are available to move their vehicles in restricted space environments.
4. Eliminates the hazard of drag damage to road surfaces by present skip loaders.
5. Minimises possible hazard of accidentally damaging the adjacent parked vehicles.
6. Does not require muscular strength by lone skip loader operator to pivot skip around, or hazard of leaving skip controls unattended.
7. Convenient to place and retrieve skips over a boundary wall (Figs 4 & 5).

### REFERENCE TO DRAWINGS:

Fig 1 is an illustration of a preferred embodiment of the invention complete with reference numerals - showing a Hydraulic Powered Pivoting Skip Loader showing a skip about to be placed on the ground with skip heading at 90 degrees to the skip loader vehicle heading.
Fig 2 is an illustration showing the Pivoting Skip Loader invention being used for placing and retrieving a skip in a restricted space between two parked vehicles in a narrow street with vehicles parked on both sides of road.

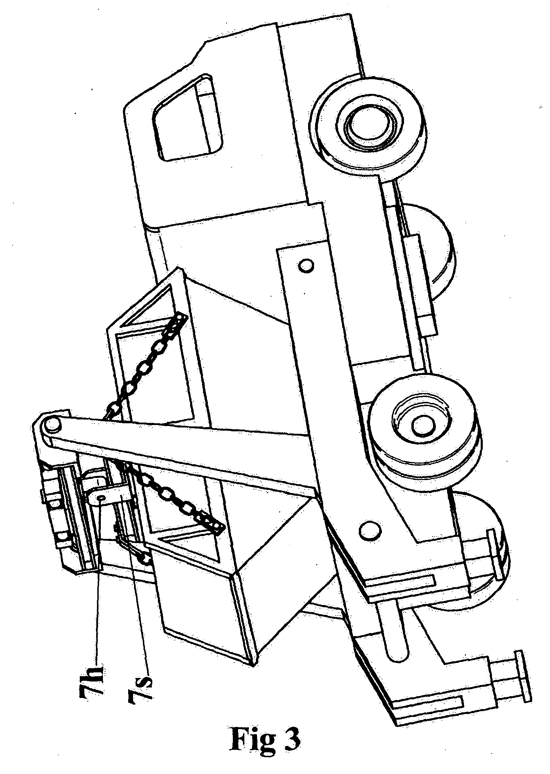

Fig 3 is an illustration of the Hydraulic Actuated Pivoting Skip Loader invention fitted on a skip loader with skip on board vehicle.
Fig 4 is an illustration showing the Pivoting Skip Loader invention being used for placing and retrieving of skip over a boundary wall, viewed from inside the boundary wall.
Fig 5 is an illustration showing the Pivoting Skip Loader invention being used for placing and retrieving of skip over a boundary wall viewed from outside the boundary wall.
Fig 6 is an illustration of a conversion attachment embodiment of the invention complete with reference numerals showing a typical Conversion Hydraulic Powered Pivoting Skip Loader Attachment Adaptor only (without skip loader vehicle), for converting existing skip loaders into Pivoting Skip Loaders.

### DESCRIPTION

1. According to the present invention there is provided a Remote Controlled Powered Pivoting Skip Loader available as a complete product Figs 1- 5, or alternatively Fig 6 as an attachment for conversion of existing skip loaders into pivoting skip loaders, both for easy pivoting, placing and retrieving of skips on and off ground at any desirable angle to the heading of the Skip Loader Vehicle, comprising (Figs 1 & 6) a pair of horizontal shafts, 1, securely attached to the top ends, 2, of a skip loader's lift arms, 3, the shafts, 1, are coupled to a pair of Horizontal Adjustable Self-levelling Bushed Brackets, 4, attached to a horizontal beam means, 5, centrally supporting a Remote Controlled Powered Pivoting Actuator means, 6, embodying a central vertical axis pivot pin assembly, 7, attached beneath to a centrally supported suspension bar, 8, provided at both ends with a pair of Saddles, 9, linked to Skip Chains, 10, Shackles, 11, for attachment to a skip, 12, the Remote Controlled Powered Pivoting Actuator, 6, is provided with a Remote Controlled Pivoting control means, 13, and power source, 14, preferably existing power source, 14, on the skip loader, 15.
2. The pair of horizontal shafts, 1, preferably comprises a pair of short shafts, 1, securely attached to the inside top ends, 2, of the skip loader's lift arms, 3, including top ends of skip loaders fitted with long reach telescopic lift arms (not shown).
3. The pair of Horizontal Adjustable, Self-levelling Bushed Brackets, 4, preferably comprises a pair of L-shaped steel brackets, 4, each provided with a self lubricated bearing means, preferably bush, 4b, matching the short shafts, 1, each bush, 4b, is located near the top of the vertical section of the L-shaped brackets, 4, for self-levelling of skip, 12, in the pitch axis to minimise bending, shear stresses in pivot pin, 7p, and to horizontally adjust bushes, 4b, for different lift arm spans.
4. The horizontal beam means, 5, preferably comprises a pair of RSJs, 5, with secure attachment means to the L-brackets, 4, and support attachment means for the pivoting actuator, 6, alternatively, (not shown) the beam comprises a solid circular bar, a tubular sectioned bar, box beam, custom fabricated sections, each provided with a vertical aperture sufficient to accommodate the pivoting actuator.
5. The Remote Controlled Powered Pivoting Actuator, 6, includes a hydraulic powered remote controlled, rotary actuator, 6, (including hydraulic rack & pinion rotary actuators provided with tapered roller hearings to support high external vertical thrust loads) with means to pivot the skip, 12, (clockwise and anti-clockwise) by at least 360 degrees each way; and alternatively (not shown) the pivoting actuator includes pneumatic and electric pivoting actuators connected as appropriate to existing pneumatic and/or electric power source on skip loader.
6. The pivot pin assembly, 7, includes provision of a lateral self-levelling horizontally hinged sling, 7s, for supporting the centrally supported suspension bar, 8, the hinge pin, 7h, of the sling, 7s, is so provided for lateral self-levelling of skip, 12, in the roll axis, to minimise bending and shear stresses in pivot pin, 7p.
7. The centrally supported suspension bar, 8, comprises robust load carrying beam means, preferably a single RSJ section, 8, fastened in the centre of its span to the sling, 7s, and at each end to the Saddles, 9, linked to Skip Chains, 10, and Shackles, 11, for attachment to skip, 12, alternatively (not shown) the suspension bar means comprises and includes a solid circular bar, a tubular sectioned bar, a box beam and a fabricated beam.
8. The Remote Controlled Powered pivoting control, 13, preferably comprises hydraulic powered, pivoting actuator control means, 13, to match the hydraulic pivoting actuator, 6, to match the hydraulic power supply source, 14, already provided on the skip loader vehicle, 15, the hydraulic powered, pivoting actuator controls, 13, are provided with means to control the pivoting of the skip, 12, (clockwise and anti-clockwise) by at least 360 degrees each way, and alternatively (not shown) the pivoting actuator controls means include matching pneumatic and electric pivoting actuator controls to match the pneumatic and electric power source where applicable.

## Claims

1. Remote Controlled Powered Pivoting Skip Loader / Skip Loader Attachment for conversion of existing skip loader vehicles (15) into pivoting skip loader vehicles (15) for easy pivoting, placing and retrieving of skips (12) on and off ground at any desirable angle to the heading of a Skip Loader Vehicle (15) **characterized in that** it comprises :
horizontal shaft means (1) securely attachable to the inside top ends (2) of skip loader's lift arms (3), said horizontal shaft means (1) coupled to horizontal adjustable, self-levelling Bushed Bracket means (4) attached to a horizontal beam means (5) centrally supporting a Remote Controlled Powered Pivoting Actuator means (6) embodying a central vertical axis pivot pin (7p), bearing and coupling means (7h, 7s) attached beneath to a centrally supported suspension bar means (8) provided at both ends with Saddles (9) linked to Skip Chains (10) and shackles (11) for attachment to a skip (12), said Remote Controlled Powered Pivoting Actuator means (6) provided with Remote Controlled Pivoting Control means (13) and power source means (14), preferably existing power source on said skip loader vehicle (15).

2. Remote Controlled Powered Pivoting Skip Loader / Skip Loader Attachment as in claim 1, wherein said horizontal shaft means (1) comprise a pair of short shafts (1) securely attachable to said inside top ends (2) of said skip loader's lift arms (3), including top ends (2) of skip loader vehicles (15) fitted with long reach telescopic lift arms.

3. Remote Controlled Powered Pivoting Skip Loader / Skip Loader Attachment as in claim 2, wherein said horizontal adjustable, Self-levelling Bushed Bracket means (4) preferably comprises a pair of L-shaped steel brackets (4) each provided with self lubricated bearing means (4b) preferably bush, matching said short shafts (1), each bush (4b) located near top vertical section of said L-shaped bracket (4) for self-levelling of skip (12) in the pitch axis, to minimise bending, shear stresses in pivot pin (7) and to horizontally adjust bushes (4b) for different lift arm spans.

4. Remote Controlled Powered Pivoting Skip Loader / Skip Loader Attachment as in claim 3, wherein said horizontal beam means (5) preferably comprises a pair of RSJs with secure attachment means to said L-shaped brackets (4) and support attachment means for said Remote Controlled Powered Pivoting Actuator means (6), alternatively, said horizontal beam means (5) comprises a solid circular bar, a tubular sectioned bar, box beam sections each provided with a vertical aperture to accommodate the Remote Controlled Powered Pivoting Actuator means (6).

5. Remote Controlled Powered Pivoting Skip Loader / Skip Loader Attachment as in claim 4, wherein said Remote Controlled Powered Pivoting Actuator means (6) includes a hydraulic powered rotary actuator, including hydraulic rack & pinion rotary actuators provided with tapered roller hearings to support high external vertical thrust loads, with means to pivot said skip (12) clockwise and anti-clockwise by at least 360 degrees each way; alternatively, said Remote Controlled Powered Pivoting Actuator means (6) includes pneumatic and electric pivoting actuators connected as appropriate to existing pneumatic and/or electric power source on skip loader vehicle (15).

6. Remote Controlled Powered Pivoting Skip Loader I Skip Loader Attachment as in claim 5, wherein pivot pin assembly means (7) includes provision of a lateral self-levelling horizontally hinged sling for supporting said centrally supported suspension bar, said pivot of said sling so provided for lateral self-levelling of skip (12) in the roll axis, to minimise bending and shear stresses in pivot pin.

7. Remote Controlled Powered Pivoting Skip Loader / Skip Loader Attachment as in claim 6, wherein said centrally supported suspension bar means comprises a robust load carrying beam means, preferably a single RSJ section fastened in the centre of its span to said sling, and at each end to said Saddles (9), linked to said Skip Chains (10), and said Shackles (11), for attachment to said skip (12), alternatively, said suspension bar means comprises and includes a solid circular bar, a tubular sectioned bar, a box beam and a fabricated beam.

8. Remote Controlled Powered Pivoting Skip Loader I Skip Loader Attachment as in claim 7, wherein said Remote Controlled Powered pivoting control preferably comprises hydraulic powered, pivoting actuator control means to match said hydraulic pivoting actuator to match said hydraulic power supply source already provided on said skip loader vehicles, said hydraulic powered, pivoting actuator controls are provided with means to control said pivoting of said skip (clockwise and anti-clockwise) by at least 360 degrees each way, and alternatively said pivoting actuator control means include matching pneumatic and electric pivoting actuator controls to match pneumatic and electric power source where applicable.

## Patentansprüche

1. Ferngesteuerter Motor-Schwenk-Kipplader / Zusatzgerät (erhältlich als komplettes Produkt)oder wahlweise als ein Zusatzgerät für das Umbauen existierender Kipplader (15) in Schwenk-Kipplader (15), sowohl zum leichten Schwenken, Platzieren auf dem Boden als auch Aufnehmen von Kippkübeln (12) vom Boden mit jedem beliebigen Winkel zur Vorderseite des Kippladers (15), der sich auszeichnet durch einen Träger (1), der sicher an den inneren oberen Enden (2) der Hubarme (3) des Kippladers befestigt ist, wobei der Träger (1) mit horizontal einstellbaren, selbst nivellierenden Stützen mit Laufbüchsen (4) gekoppelt ist, die an einem horizontalen Balken (5) befestigt sind, der zentral einen ferngesteuerten Motor-Schwenkstellantrieb (6) trägt, der einen zentralen vertikalen Achsschwenkbolzen (7p) bildet, Lager- und Koppelmitteln (7h, 7s), die unterhalb an einer zentral gestützten Aufhängstange (8) befestigt sind, die an beiden Enden mit Satteln (9) versehen ist, die mit Kippkübelketten (10) verbunden sind, und Bügel (11) zum Befestigen an einem Kippkübel (12), wobei der ferngesteuerte Motor-Schwenkstellantrieb (6) mit einer ferngesteuerten Schwenksteuerung (13) und Leistungsquelle (14) versehen ist, vorzugsweise der existierenden Leistungsquelle des Kippladers (15).

2. Ferngesteuerter Motor-Schwenk-Kipplader / Zusatzgerät nach Anspruch 1, wobei der horizontale Träger (1) vorzugsweise ein Paar kurzer Träger (1) aufweist, die sicher an den inneren oberen Enden (2) der Hubarme (3) des Kippladers befestigt sind, wobei die oberen Enden (2) des Kippladers (15) mit weit reichenden Teleskophubarmen ausgestattet sind.

3. Ferngesteuerter Motor-Schwenk-Kipplader / Zusatzgerät nach Anspruch 2, wobei die horizontal einstellbaren, selbst nivellierenden Stützen mit Laufbüchsen (4) vorzugsweise ein Paar L-förmiger, dicker Stahlstützen (4) aufweisen, die jeweils mit selbst schmierenden Lagern (4b), vorzugsweise Laufbüchsen versehen sind, die den kurzen Wellen (1) entsprechen, wobei jede Laufbüchse (4b) in der Nähe des oberen vertikalen Abschnitts der L-förmigen Stütze (4) zum Selbstnivellieren des Kippkübels (12) in der Nickachse liegt, um Biegen, Scherbelastungen in dem Schwenkbolzen (7) zu minimieren und die Laufbüchsen (4b) für unterschiedliche Hubarmspannweiten horizontal einzustellen.

4. Ferngesteuerter Motor-Schwenk-Kipplader / Zusatzgerät nach Anspruch 3, wobei der horizontale Balken (5) vorzugsweise ein Paar RSJ-Träger mit sicheren Mitteln zum Befestigen an den L-förmigen Stützen (4) und Tragbefestigungsmitteln für den Schwenkstellantrieb (6) aufweist, wobei der Balken als Alternative eine massive Stange (5) mit kreisförmigem Querschnitt, eine röhrenförmige mehrgliedrige Stange, einen Kastenquerschnittträger aufweist, die jeweils mit einer vertikalen Öffnung versehen sind, um den Schwenkstellantrieb (6) unterzubringen.

5. Ferngesteuerter Motor-Schwenk-Kipplader / Zusatzgerät nach Anspruch 4, wobei der ferngesteuerte Motor-Schwenkstellantrieb (6) einen hydraulisch angetriebenen Drehstellantrieb aufweist (inklusive hydraulischer Zahnstangenantrieb mit Kegelrollenlager zum Stützen hoher, externer, vertikaler Schublasten) mit Mitteln zum Schwenken des Kippkübels (12) (in und gegen den Uhrzeigersinn) um mindestens 360 ° in beide Richtungen; und wobei der Schwenkstellantrieb (6) als Alternative pneumatische und elektrische Schwenkstellantriebe aufweist, die entsprechend an eine existierende pneumatische und/oder elektrische Leistungsquelle auf dem Kipplader (15) angeschlossen sind.

6. Ferngesteuerter Motor-Schwenk-Kipplader / Zusatzgerät nach Anspruch 5, wobei die Schwenkbolzeneinheit (7) das Bereitstellen einer seitlichen, selbst nivellierenden, horizontal angelenkten Halterung zum Tragen der zentral gestützten Aufhängstange aufweist, wobei der Bolzen der Halterung zum seitlichen Selbstnivellieren des Kippkübels (12) in der Rollachse bereitgestellt ist, um Biegen und Scherbelastungen im Schwenkbolzen zu minimieren.

7. Ferngesteuerter Motor-Schwenk-Kipplader / Zusatzgerät nach Anspruch 6, wobei die zentral gestützte Aufhängstange einen starken Lastträgerbalken aufweist, vorzugsweise einen einzelnen RSJ-Abschnitt, der in der Mitte seiner Spannweite an der Halterung befestigt ist, und an beiden Seiten an den Satteln (9), die mit den Kippkübelketten (10) verbunden sind, und Bügel (11) zum Befestigen am Kippkübel (12), wobei die Aufhängstange als Alternative eine massive Stange mit kreisförmigem Querschnitt, eine röhrenförmige mehrgliedrige Stange, einen Kastenquerschnittträger und einen vorgefertigten Balken aufweist.

8. Ferngesteuerter Motor-Schwenk-Kipplader / Zusatzgerät nach Anspruch 7, wobei die ferngesteuerte Motor-Schwenksteuerung vorzugsweise ein hydraulisch angetriebenes Steuermittel für den Schwenkstellantrieb aufweist, der der hydraulischen Leistungsquelle entspricht, die bereits auf dem Kipplader bereitgestellt ist, wobei das hydraulisch angetriebene Steuermittel für den Schwenkstellantrieb mit Mitteln zum Steuern des Schwenkens des Kippkübels (in und gegen den Uhrzeigersinn) um mindestens 360 Grad in beide Richtungen versehen ist, und wobei die Steuerung des Schwenkstellantriebs als Alternative entsprechende Steuermittel für pneumatische und elektrische Schwenkstellantriebe aufweist, die gegebenenfalls der pneumatischen und elektrischen Leistungsquelle entsprechen.

## Revendications

1. L'invention concerne un dispositif pivotant et télécommandé de chargement d'une benne amovible pour convertir des véhicules porte-bennes (15) existants en véhicules avec dispositif porte-bennes pivotant (15) pour faciliter le pivotement, la dépose sur le sol et la récupération de bennes posées au sol (12) dans n'importe quel angle par rapport à la direction du véhicule porte-bennes (15), dispositif **caractérisé par** les éléments suivants :
Un arbre horizontal (1) solidement fixé à l'intérieur des extrémités supérieures (2) des bras de levage (3) du véhicule porte-bennes, ledit arbre horizontal (1) étant couplé à des équerres manchonnées (4) horizontales, réglables, à autoréglage du niveau, fixées à une poutrelle (5) horizontale portant en son centre un actionneur pivotant, télécommandé et motorisé (6) comprenant un axe d'articulation (7p) central vertical, un coussinet et un étrier de couplage (7h, 7s) fixés dans leur partie inférieure à une barre de suspension (8) à fixation centrale dont les deux extrémités sont pourvues de consoles (9) couplées à des chaînes (10) de benne et à des manilles (11) pour fixer la benne (12), ledit actionneur pivotant, télécommandé et motorisé (6) étant pourvu d'une télécommande de pivotement (13) et d'une source d'alimentation (14), de préférence la source électrique existante du véhicule porte-bennes (15).

2. Le dispositif pivotant et télécommandé de chargement d'une benne amovible tel que décrit dans la revendication 1, **caractérisé en ce que** ledit arbre horizontal (1) est pourvu de deux arbres (1) courts fixés solidement à l'intérieur des dites extrémités supérieures (2) des dits bras de levage (3) du véhicule porte-bennes, les extrémités supérieures (2) du véhicule porte-bennes (15) étant dotées de bras télescopiques de levage à longue portée.

3. Le dispositif pivotant et télécommandé de chargement d'une benne amovible tel que décrit dans la revendication 2, **caractérisé en ce que** les équerres manchonnées (4) horizontales, réglables, à autoréglage de niveau sont composées d'équerres d'acier (4) en L intégrant chacune des roulements autolubrifiés (4d), de préférence des coussinets en une seule pièce adaptés aux dits arbres courts (1), chaque coussinet (4b) étant situé à proximité de la section verticale supérieure des dites équerres en L (4) pour un autoréglage du niveau de la benne (12) dans l'axe de tangage, de manière à minimiser les tensions de flexion et de cisaillement s'exerçant sur l'axe d'articulation (7) et pour ajuster horizontalement les coussinets en une seule pièce (4b) aux différents angles des bras de levage.

4. Le dispositif pivotant et télécommandé de chargement d'une benne amovible tel que décrit dans la revendication 3, **caractérisé en ce que** ladite poutrelle horizontale (5) est composée de préférence d'une paire de poutrelles laminées avec un dispositif de fixation aux dites équerres (4) en L et d'un dispositif de fixation et d'appui pour ledit actionneur pivotant, télécommandé et motorisé (6), ou bien, ladite poutrelle horizontale (5) est composée d'une barre circulaire solide, d'une barre à section tubulaire, de sections de poutres à caisson, chacune étant pourvue d'une ouverture verticale pour loger l'actionneur pivotant, télécommandé et motorisé (6).

5. Le dispositif pivotant et télécommandé de chargement d'une benne amovible tel que décrit dans la revendication 4, **caractérisé en ce que** ledit actionneur pivotant, télécommandé et motorisé (6) est composé d'un actionneur rotatif hydraulique comprenant des actionneurs rotatifs à pignon et crémaillère hydrauliques dotés de roulements à rouleaux coniques afin de supporter des charges axiales verticales et externes élevées et de faire pivoter ladite benne (12) dans le sens horaire ou antihoraire d'au moins 360° dans chaque direction, ou ledit actionneur pivotant, télécommandé et motorisé (6) est composé d'actionneurs pivotants pneumatiques et électriques raccordés de manière appropriée aux systèmes d'alimentation pneumatique et/ou électrique du véhicule porte-bennes (15).

6. Le dispositif pivotant et télécommandé de chargement d'une benne amovible tel que décrit dans la revendication 5, **caractérisé en ce que** ledit groupe d'axe d'articulation (7) intègre une fixation articulée latérale à autoréglage de niveau horizontal pour ladite barre de suspension à fixation centrale, ledit axe de ladite fixation permettant un autoréglage du niveau latéral de la benne (12) dans l'axe de roulis afin de minimiser les tensions de flexion et de cisaillement dans l'axe d'articulation.

7. Le dispositif pivotant et télécommandé de chargement d'une benne amovible tel que décrit dans la revendication 6, **caractérisé en ce que** ladite barre de suspension à fixation centrale est composée d'une solide poutrelle porteuse, de préférence une section unique de poutrelle laminée fixée en son centre à ladite fixation et aux dites consoles (9) à ses extrémités, raccordées aux dites chaînes de benne (10) et aux dites manilles (11), pour la fixation de ladite benne (12), ou, une d'une barre de suspension composée et intégrant une barre circulaire solide, une barre à section tubulaire, une poutrelle à caisson et une poutrelle usinée.

8. Le dispositif pivotant et télécommandé de chargement d'une benne amovible tel que décrit dans la revendication 7, **caractérisé en ce que** la commande de pivotement motorisée télécommandée est composée de préférence d'une commande d'actionneur de pivotement hydraulique adaptée au dit actionneur de pivotement hydraulique, adaptée au système d'alimentation hydraulique déjà présent sur ledit véhicule porte-bennes, les dites commandes d'actionneur hydraulique de pivotement étant dotées de dispositifs permettant de commander le pivotement de ladite benne (dans le sens horaire et antihoraire) d'au moins 360° dans chaque direction, ou la commande d'actionneur de pivotement est composée de commandes d'actionneur de pivotement pneumatiques et électriques adaptées, le cas échéant, aux systèmes d'alimentation pneumatique et électrique.
